# FASCICULE DE BREVET EUROPEEN

(11) **EP 3 115 226 B1**
(45) Date de publication et mention de la délivrance du brevet: **15.08.2018**
(21) Numéro de dépôt: 16020254.5
(22) Date de dépôt: 29.06.2016
(51) Int. Cl.: B60B 27/00

(54) **PIÈCE DE CENTRAGE POUR UN ROULEMENT DE ROUE, ROULEMENT ET ASSEMBLAGE DE ROUE DE VÉHICULE ASSOCIÉS**
ZENTRIERTEIL FÜR EIN RADLAGER, ENTSPRECHENDES RADLAGER UND ENTSPRECHENDE RADANORDNUNG EINES FAHRZEUGS
CENTRING PART FOR A WHEEL BEARING, ASSOCIATED BEARING ASSEMBLY AND VEHICLE WHEEL

(30) Priorité: 06.07.2015 FR 1556401
(43) Date de publication de la demande: 11.01.2017
(73) Titulaire: NTN-SNR Roulements, 76000 Annecy (FR)
(72) Inventeur: Motot, Jean-Noel, 74600 Seynod (FR)
(74) Mandataire: Broydé, Marc

(56) Documents cités:
- WO-A1-2012/122967
- DE-A1- 10 108 365
- FR-A1- 2 514 301

## Description

### DOMAINE TECHNIQUE DE L'INVENTION

L'invention se rapporte au centrage d'un disque de frein et/ou d'une jante sur un moyeu roulement de roue de véhicule.

### ÉTAT DE LA TECHNIQUE ANTÉRIEURE

Dans le document JP7-317777 est décrit un moyeu de roue composé d'une bague extérieure de roulement de roue dans laquelle sont formé des chemins de roulement, et d'une douille soudée à la bague extérieure, faisant saillie axialement par rapport à un flasque de la bague extérieure dans une direction opposée au chemins de roulement. Après soudage, diverses opérations de finition de la douille et de la bague sont effectuées. La douille est une pièce de centrage qui a vocation à permettre le centrage d'un disque de frein et/ou d'une jante sur le moyeu de roue. Dans la mesure où les opérations de finition de la douille on lieu après le soudage de la douille sur la bague extérieure, il est possible de rectifier les surfaces de centrage autant que nécessaire, si des déformations se sont produites lors du soudage.

Dans le document DE 10 2006 029 604 est proposée un montage analogue d'un moyeu de roue, dans lequel une douille de centrage peut être emmanchée, le cas échéant en force, et de préférence avec une liaison de matière par brasage, soudage ou collage à une extrémité d'une bague extérieure de roulement de roue. Aucune opération de finition des surfaces de la douille postérieurement à son emmanchement dans la bague extérieure n'est décrite. Dans l'hypothèse où l'on souhaite solidariser la douille à la bague uniquement par frettage, sans brasage, soudage ou collage, les contraintes dans le corps de la douille peuvent induire des déformations dans la zone fonctionnelle de la douille dédiée au centrage du disque de frein ou de la jante. Si l'on tente d'utiliser cette technologie pour monter un disque de frein ou une jante avec un jeu de centrage très faible, on fait face à de nombreux défauts sur la chaîne d'assemblage du véhicule. Un tel montage impose donc des tolérances relativement importantes lors du montage du disque de frein et de la jante sur la douille. Un assemblage similaire est proposé dans le document WO14012777, qui présente les mêmes inconvénients. FR2514301A décrit une pièce de centrage pour un roulement de roue comportant une zone annulaire de frettage.

### EXPOSÉ DE L'INVENTION

L'invention vise à remédier aux inconvénients de l'état de la technique et à rendre compatible un frettage d'une pièce de centrage dans une bague de roulement de roue, avec de faibles tolérances de centrage.

Pour ce faire est proposé, selon un premier aspect de l'invention, une pièce de centrage pour un roulement de roue comportant une zone annulaire de frettage comportant une portée cylindrique de frettage tournée radialement vers l'extérieur et définissant un axe de référence, au moins une première zone de centrage comportant une première portée de centrage cylindrique tournée radialement vers l'extérieur, et une zone annulaire de transition s'étendant de la zone annulaire de frettage à la première zone de centrage, la pièce de centrage ayant une surface extérieure tournée radialement vers l'extérieur incluant la portée cylindrique de frettage, la première portée de centrage et une face extérieure de la zone annulaire de transition, et une surface intérieure tournée radialement vers l'intérieur et délimitant une cavité à l'intérieur de la surface extérieure. La pièce de centrage a une épaisseur radiale, mesurée entre la surface extérieure et la surface intérieure, qui varie le long de l'axe de référence, en passant par une valeur minimale au niveau de la zone annulaire de transition, la valeur minimale étant inférieure à la moitié de d'une épaisseur radiale mesurée au niveau de la zone annulaire de frettage et à la moitié d'une épaisseur radiale mesurée au niveau de la première zone de centrage.

L'épaisseur réduite de la zone annulaire de transition permet de découpler la première zone de centrage de la zone de frettage, de sorte que les contraintes dans la zone de frettage n'induisent que peu de déformations dans la première zone de centrage.

De préférence la zone annulaire de transition a une longueur, mesurée parallèlement à l'axe de référence, supérieure à la valeur minimale, et de préférence supérieure à deux fois la valeur minimale. La répercussion des contraintes de frettage diminue en effet lorsque la distance augmente.

Suivant un mode de réalisation qui s'avère particulièrement efficace en pratique, la face extérieure de la zone annulaire de transition forme une gorge annulaire extérieure de rétrécissement.

De façon similaire, et suivant un mode de réalisation qui s'avère également particulièrement efficace en pratique, la surface intérieure de la pièce de centrage forme une gorge annulaire intérieure de rétrécissement au niveau de la zone annulaire de transition.

Suivant un mode de réalisation, la première portée de centrage a un diamètre inférieur à la portée cylindrique de frettage.

De préférence, la pièce de centrage comporte en outre une deuxième zone de centrage comportant une deuxième portée de centrage tournée radialement vers l'extérieur, la première zone de centrage étant située axialement entre la zone annulaire de transition et la deuxième zone de centrage. La première zone de centrage peut alors être dédiée au centrage du disque de frein et la deuxième zone de centrage au centrage de la jante. Suivant un mode de réalisation la deuxième portée de centrage a un diamètre inférieur à la première portée de centrage.

La pièce de centrage peut être une douille tubulaire ouverte à ses deux extrémités. Alternativement, la pièce de centrage comporte une paroi de fond pleine. Le fond plein contribue à rigidifier la pièce de centrage et à minimiser les déformations induites par le frettage. De plus, la pièce de centrage présente alors une fonction supplémentaire de fermeture étanche du roulement. Dans une telle hypothèse, on peut également prévoir que la surface extérieure de la pièce de centrage forme un relief de démontage, la première portée de centrage étant située axialement entre le relief de démontage et la portée de frettage, pour faciliter le démontage de pièce de centrage lors d'une opération de maintenance sur la roue.

De préférence la pièce de centrage est métallique. La pièce peut être homogène ou réalisée le cas échéant avec deux nuances métalliques différentes. On peut également prévoir une pièce de centrage dont la portée de frettage, et le cas échéant la première et/ou la deuxième portée de centrage sont métalliques, alors que le corps de la pièce de centrage est réalisé en matière plastique.

Suivant un autre aspect de l'invention, celle-ci a trait à un roulement de roue comportant au moins une bague extérieure sur laquelle sont formé un ou plusieurs chemins de roulement, une ou plusieurs bagues intérieures sur lesquelles sont formés un ou plusieurs chemins de roulement, des corps roulants pour rouler sur le ou les chemins de roulements formés sur la bague extérieure et sur le ou les chemins de roulement formés sur la ou les bagues intérieures, et une pièce de centrage selon le premier aspect de l'invention, la portée cylindrique de frettage étant frettée dans la bague extérieure, la première zone centrage faisant saillie axialement vers l'extérieur par rapport à la bague extérieure (. De préférence la pièce de centrage est solidarisée à la bague extérieure sans brasage, soudage ou collage.

Suivant un autre aspect de l'invention, celle-ci a trait à un assemblage de roue de véhicule, comportant un roulement de roue selon l'aspect précédent de l'invention, et un disque de frein centré sur la première portée de centrage. De préférence l'assemblage de roue comporte en outre une jante de roue centrée sur la deuxième portée de centrage.

Suivant un autre aspect de l'invention, pouvant se combiner avec les précédents, celle-ci a trait à un moyeu de roue comportant: une bague extérieure monobloc de roulement présentant au moins un chemin de roulement extérieur tourné radialement vers l'intérieur et définissant un axe de référence du moyeu de roue et une cavité tubulaire, et un flasque pourvu de trous de fixation d'une jante de roue; et une pièce de centrage comportant au moins une première zone de centrage faisant saillie axialement vers l'extérieur par rapport à la bague extérieure, et comportant une première portée de centrage cylindrique tournée radialement vers l'extérieur, la pièce de centrage ayant une surface extérieure tournée radialement vers l'extérieur de la cavité et incluant la première portée de centrage, et une surface intérieure tournée radialement vers l'intérieur de la cavité, la pièce de centrage comportant une paroi de fond pleine fermant une extrémité axiale de la cavité.

### BRÈVE DESCRIPTION DES FIGURES

D'autres caractéristiques et avantages de l'invention ressortiront à la lecture de la description qui suit, en référence aux figures annexées, qui illustrent :
- la figure 1, un détail d'un ensemble de roue de véhicule selon un mode de réalisation de l'invention;
- la figure 2, un détail d'une pièce de centrage (30) de l'ensemble de roue de la figure 1.

Pour plus de clarté, les éléments identiques ou similaires sont repérés par des signes de référence identiques sur l'ensemble des figures.

### DESCRIPTION DÉTAILLÉE DE MODES DE RÉALISATION

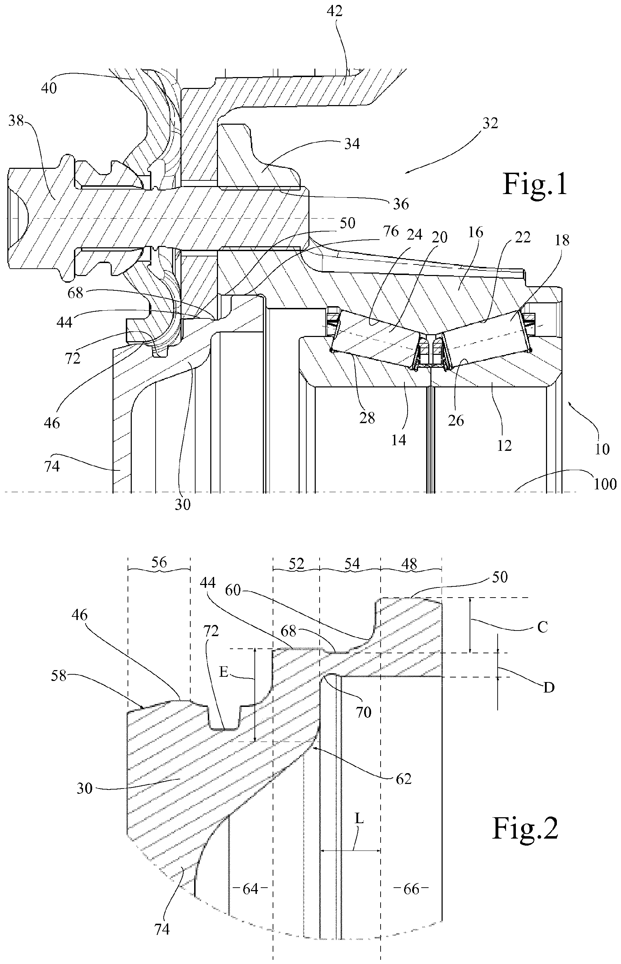

Sur la figure **1** est illustré un roulement **10** de roue non motrice de véhicule, composé de deux bagues intérieures **12, 14** destinées à être montée sur un arbre (non représenté), d'une bague extérieure **16** monobloc et de deux rangées de corps roulants **18, 20** disposés entre des chemins de roulement extérieurs **22, 24** formés sur la bague extérieure **16** et des chemins de roulement intérieurs **26, 28** formés sur les deux bagues intérieures **12, 14.** La bague extérieure **16** est solidaire d'une pièce de centrage **30** et forme avec cette dernière un moyeu de roue **32.** A cet effet, la bague extérieure **16** forme un flasque **34** comportant un ou plusieurs trous **36,** filetés ou non, pour le passage de tiges de fixation **38** d'une jante **40** de la roue et d'un disque de frein **42,** alors que la pièce de centrage **30** matérialise une première portée de centrage **44** cylindrique pour le disque de frein **42** et une deuxième portée de centrage **46** cylindrique pour la jante **40.** Les chemins de roulements extérieurs **22, 24** de la bague extérieure **16** définissent un axe de référence **100** du roulement **10,** qui est également un axe de révolution du moyeu **32** et de la roue. La pièce de centrage **30** est frettée dans la bague extérieure **16** et fait saillie axialement vers l'extérieur par rapport à la bague extérieure **16,** dans une direction axiale opposée aux chemins de roulement extérieurs **22, 24.**

Comme illustré en détails sur la figure **2****,** la pièce de centrage **30,** qui est de préférence métallique et présente de préférence une symétrie de révolution autour de l'axe de référence **100,** comporte une zone annulaire de frettage **48** comportant une portée cylindrique de frettage **50** tournée radialement vers l'extérieur, au moins une première zone de centrage **52** comportant la première portée de centrage **44** cylindrique tournée radialement vers l'extérieur, et une zone annulaire de transition **54** située axialement entre la zone annulaire de frettage **48** et la première zone de centrage **52** et s'étendant de la zone annulaire de frettage **48** à la première zone de centrage **52,** et une deuxième zone de centrage **56** comportant la deuxième portée de centrage **46** tournée radialement vers l'extérieur, la première zone de centrage **52** étant située axialement entre la zone annulaire de transition **54** et la deuxième zone de centrage **56.**

La pièce de centrage **30** présente une surface extérieure **58** tournée radialement vers l'extérieur incluant la portée cylindrique de frettage **50,** la première portée de centrage **44,** une face extérieure **60** de la zone annulaire de transition **54,** et la deuxième portée de centrage **46.** La pièce de centrage **30** présente également une surface intérieure **62** tournée radialement vers l'intérieur et délimitant une cavité **64** à l'intérieur de la surface extérieure **58,** prolongeant une cavité tubulaire **66** délimitée par la bague extérieure **16** et dans laquelle sont logées les bagues intérieures **12, 14.**

Comme illustré sur la figure **2****,** la pièce de centrage **30** a une épaisseur radiale, mesurée entre la surface extérieure **58** et la surface intérieure **62,** qui varie le long de l'axe de référence **100,** et qui passe par une valeur minimale D au niveau de la zone annulaire de transition **54.** Cette valeur minimale D est inférieure à la moitié de l'épaisseur radiale C mesurée au niveau de la zone annulaire de frettage **48** et à la moitié de l'épaisseur radiale E mesurée au niveau de la première zone de centrage **52.** La zone annulaire de transition **54** a une longueur L, mesurée parallèlement à l'axe de référence, supérieure à deux fois la valeur minimale D. La face extérieure **60** de la zone annulaire de transition **54** forme une gorge annulaire **68** extérieure de rétrécissement. La surface intérieure **62** de la pièce de centrage **30** forme une gorge annulaire **70** intérieure de rétrécissement au niveau de la zone annulaire de transition **54.** La valeur minimale D se mesure dans un plan coupant la gorge annulaire intérieure **70** et la gorge annulaire extérieure **68.**

Dans le mode de réalisation illustré sur les figures, la première portée de centrage **44** a un diamètre inférieur à la portée cylindrique de frettage **50.** La deuxième portée de centrage **46** a quant à elle un diamètre inférieur à la première portée de centrage **44.** La surface extérieure **58** de la pièce de centrage **30** forme une gorge annulaire de démontage **72** dans une zone intermédiaire entre la première portée de centrage **44** et la deuxième portée de centrage **46.**

La pièce de centrage **30** comporte une paroi de fond **74** pleine qui vient fermer la cavité **66** délimitée par la bague extérieure **16** et la pièce de centrage **30.**

La pièce de centrage **30** est solidarisée à la bague extérieure **16** par frettage, à chaud ou à froid, de la portée cylindrique de frettage **50** dans un embrèvement **76** de la bague extérieure **16,** sans brasage, soudage ou collage et plus généralement sans autres opérations de solidarisation mécanique. En pratique, cette opération de frettage peut être pratiquée avant ou, de préférence, après montage de la bague intérieure **12, 14** sur l'arbre destiné à la recevoir, ce qui permet notamment d'accéder à l'extrémité de l'arbre par l'ouverture d'accès existant avant la mise en place de la pièce de centrage **30.** Après frettage de la pièce de centrage **30,** on peut monter le disque de frein **42** et la jante **40** de roue, et les fixer grâce aux tiges de fixation **38.** Le disque de frein **42** est de préférence en appui contre le flasque **34** et forme un arrêt qui empêche toute migration de la pièce de centrage **30.** La jante **40** est de préférence en appui contre le disque de frein **42** dans cette zone de fixation. Dans l'hypothèse où la paroi de fond **74** pleine est présente, la pièce de centrage **30** a une double fonction de centrage et de bouchon.

Dans une exemple de réalisation, on a constaté avec une épaisseur d'environ 8 mm dans la zone de frettage, de 3mm dans la zone de transition de 10 mm dans la première zone de centrage, qu'il est possible de garantir une tolérance de ± 15µm au niveau de la première portée de centrage 44.

La gorge annulaire de démontage **72** permet le démontage de la pièce de centrage **30** à l'aide d'un outil.

Comme illustré sur la figure **1****,** la pièce de centrage **30** est radialement en recouvrement avec la ou les bagues intérieures **12, 14.** La portée cylindrique de frettage **50** et l'embrèvement **76** sont situés radialement à l'extérieur du ou des chemins de roulement **22, 24** formés sur la bague extérieure **16,** pour permettre l'usinage des chemins de roulement **22, 24.**

Naturellement, l'exemple représenté sur les figures et discuté ci-dessus n'est donné qu'à titre illustratif et non limitatif. La pièce de centrage **30** illustrée sur les figures est de préférence forgée usinée. Mais on peut également envisager qu'une partie de la pièce, par exemple la totalité de la surface extérieure **58** incluant la portée de frettage **50** et les portées de centrage **44, 46,** soit métallique et qu'une autre, par exemple la paroi de fond **74** et/ou une portion intérieure des zones de frettage **48** et de centrage **52, 56,** soit en matériau plastique. On peut également envisager que la zone annulaire de transition **54** constitue une zone en matière plastique formant une zone de discontinuité entre une zone de frettage **48** dont au moins la portée de frettage **50** est constituée en métal et la première zone de centrage **52** dont au moins la portée de centrage **44** est constituée en métal. De façon analogue, on peut envisager que la pièce de centrage **30** soit entièrement métallique, mais avec plusieurs nuances métalliques différentes, l'une plus particulièrement dédiée par exemple à la zone de frettage **48** et une autre aux zones de centrage **52, 56,** ou bien, par exemple une nuance dédiée à la portée de frettage **50** et aux portées de centrage **44, 46,** et une autre au corps de la pièce de centrage **30.** Les corps roulants **18, 20** peuvent être des rouleaux coniques, des billes ou tout type de rouleaux approprié. Le roulement **10** peut ne comporter qu'une bague intérieure **12, 14,** l'un des deux chemins de roulement intérieurs **26, 28** étant formé directement sur l'arbre portant la bague intérieure **12, 14.** Le mode de fixation du disque de frein **42** et de la jante **40** de roue peut être de tout type. La deuxième portée de centrage **46** peut avoir un diamètre inférieur ou égal à la première portée de centrage **44.** La gorge annulaire de démontage **72** peut être remplacée par un relief de démontage de type quelconque, donnant une prise pour un outil de démontage. La paroi de fond **74** pleine peut être omise, auquel cas la pièce de centrage **30** forme une douille.

En pratique, le frettage de la pièce de centrage **30** sera effectué après le montage des bagues intérieure **12, 14** sur l'arbre fixe, toutes les fois où la présence de la pièce de centrage **30** rendrait impossible l'insertion d'un outil de serrage de la pièce, vis ou écrou, servant à arrêter la translation des bagues intérieure **12, 14.** Ceci sera le cas notamment lorsqu'au moins une partie de la pièce de centrage **30,** notamment la paroi de fond **74** lorsque celle-ci est présente, se trouve à une distance de l'axe de référence **100** inférieure à la distance entre l'axe de référence **100** et l'une au moins des bagues intérieure **12, 14.**

## Revendications

1. Pièce de centrage (30) pour un roulement (10) de roue comportant une zone annulaire de frettage (48) comportant une portée cylindrique de frettage (50) tournée radialement vers l'extérieur et définissant un axe de référence, au moins une première zone de centrage (52) comportant une première portée de centrage (44) cylindrique tournée radialement vers l'extérieur, et une zone annulaire de transition (54) s'étendant de la zone annulaire de frettage (48) à la première zone de centrage (52), la pièce de centrage (30) ayant une surface extérieure (58) tournée radialement vers l'extérieur incluant la portée cylindrique de frettage (50), la première portée de centrage (44) et une face extérieure (60) de la zone annulaire de transition (54), et une surface intérieure (62) tournée radialement vers l'intérieur et délimitant une cavité (64) à l'intérieur de la surface extérieure (58), **caractérisée en ce que** la pièce de centrage (30) a une épaisseur radiale, mesurée entre la surface extérieure (58) et la surface intérieure (62), qui varie le long de l'axe de référence, en passant par une valeur minimale (D) au niveau de la zone annulaire de transition (54), la valeur minimale (D) étant inférieure à la moitié de d'une épaisseur radiale (C) mesurée au niveau de la zone annulaire de frettage (48) et à la moitié d'une épaisseur radiale (E) mesurée au niveau de la première zone de centrage (52).

2. Pièce de centrage (30) selon la revendication 1, **caractérisée en ce que** la zone annulaire de transition (54) a une longueur (L), mesurée parallèlement à l'axe de référence, supérieure à la valeur minimale (D), et de préférence supérieure à deux fois la valeur minimale (D).

3. Pièce de centrage (30) selon l'une quelconque des revendications précédentes, **caractérisée en ce que** la face extérieure (60) de la zone annulaire de transition (54) forme une gorge annulaire extérieure de rétrécissement (68).

4. Pièce de centrage (30) selon l'une quelconque des revendications précédentes, **caractérisée en ce que** la surface intérieure (62) de la pièce de centrage (30) forme une gorge annulaire (70) intérieure de rétrécissement au niveau de la zone annulaire de transition (54).

5. Pièce de centrage (30) selon l'une quelconque des revendications précédentes, **caractérisée en ce que** la pièce de centrage comporte en outre une deuxième zone de centrage (56) comportant une deuxième portée de centrage (46) tournée radialement vers l'extérieur, la première zone de centrage (52) étant située axialement entre la zone annulaire de transition (54) et la deuxième zone de centrage (56).

6. Pièce de centrage (30) selon la revendication précédente, **caractérisée en ce que** la deuxième portée de centrage (46) a un diamètre inférieur à la première portée de centrage (44).

7. Pièce de centrage (30) selon l'une quelconque des revendications précédentes, **caractérisée en ce que** la pièce de centrage (30) comporte une paroi de fond (74) pleine.

8. Pièce de centrage (30) selon la revendication 7, **caractérisée en ce que** la surface extérieure (58) de la pièce de centrage (30) forme un relief de démontage (72), la première portée de centrage (44) étant située axialement entre le relief de démontage (72) et la portée de frettage (50).

9. Pièce de centrage (30) selon l'une quelconque des revendications précédentes, **caractérisée en ce que** la pièce de centrage (30) est métallique.

10. Roulement de roue comportant au moins une bague extérieure (16) sur laquelle sont formé un ou plusieurs chemins de roulement, une ou plusieurs bagues intérieures sur lesquelles sont formés un ou plusieurs chemins de roulement, des corps roulants (18, 20) pour rouler sur le ou les chemins de roulements formés sur la bague extérieure (16) et sur le ou les chemins de roulement formés sur la ou les bagues intérieures (12, 14), et une pièce de centrage (30) selon l'une quelconque des revendications précédentes, la portée cylindrique de frettage (50) étant frettée dans la bague extérieure (16), la première zone centrage (52) faisant saillie axialement vers l'extérieur par rapport à la bague extérieure (16).

11. Roulement de roue selon la revendication précédente, **caractérisé en ce que** la pièce de centrage (30) est solidarisée à la bague extérieure (16) sans brasage, soudage ou collage.

12. Assemblage de roue de véhicule, comportant un roulement (10) de roue selon l'une quelconque des revendications 10 à 11, et un disque de frein (42) centré sur la première portée de centrage (44).

13. Assemblage de roue de véhicule selon la revendication précédente, **caractérisé en ce que** la pièce de centrage (30) est selon l'une quelconque des revendications 5 à 6 et **en ce que** l'assemblage de roue comporte en outre une jante (40) de roue centrée sur la deuxième portée de centrage (46).

## Patentansprüche

1. Zentrierteil (30) für ein Radlager (10), mit einem ringförmigen Schrumpfbereich (48), der eine zylindrische Schrumpffläche (50) aufweist, die radial nach außen gedreht ist und eine Bezugsachse begrenzt, mindestens einem ersten Zentrierbereich (52), welcher eine erste zylindrische, radial nach außen gedrehte Zentrierfläche (44) enthält, und einem ringförmigen Übergangsbereich (54), der sich von dem ringförmigen Schrumpfbereich (48) bis zum ersten Zentrierbereich (52) erstreckt, wobei das Zentrierteil (30) eine Außenfläche (58) aufweist, die radial nach außen gedreht ist und die zylindrische Schrumpffläche (50), die erste Zentrierfläche (44) und eine Außenseite (60) des ringförmigen Übergangsbereichs (54) beinhaltet, und eine Innenfläche (62), die radial nach innen gedreht ist und einen Hohlraum (64) im Innern der Außenfläche (58) abgrenzt, **dadurch gekennzeichnet, dass** das Zentrierteil (30) eine zwischen der Außenfläche (58) und der Innenfläche (62) gemessene radiale Dicke aufweist, die sich entlang der Bezugsachse verändert und am ringförmigen Übergangsbereich (54) einen Mindestwert (D) aufweist, wobei der Mindestwert (D) kleiner als die Hälfte einer radialen, am ringförmigen Schrumpfbereich (48) gemessenen Dicke (C) und kleiner als die Hälfte einer am ersten Zentrierbereich (52) gemessenen radialen Dicke (E) ist.

2. Zentrierteil (30) nach Anspruch 1, **dadurch gekennzeichnet, dass** der ringförmige Übergangsbereich (54) eine parallel zur Bezugsachse gemessene Länge (L) hat, die größer als der Mindestwert (D) und vorzugsweise größer als zweimal der Mindestwert (D) ist.

3. Zentrierteil (30) nach einem der vorhergehenden Ansprüche, **dadurch gekennzeichnet, dass** die Außenseite (60) des ringförmigen Übergangsbereichs (54) eine sich verengende ringförmige äußere Nut (68) bildet.

4. Zentrierteil (30) nach einem der vorhergehenden Ansprüche, **dadurch gekennzeichnet, dass** die Innenfläche (62) des Zentrierteils (30) am ringförmigen Übergangsbereichs (54) eine sich verengende ringförmige innere Nut (70) bildet.

5. Zentrierteil (30) nach einem der vorhergehenden Ansprüche, **dadurch gekennzeichnet, dass** das Zentrierteil darüber hinaus einen zweiten Zentrierbereich (56) aufweist, welcher eine zweite radial nach außen gedrehte Zentrierfläche (46) umfasst, wobei sich der erste Zentrierbereich (52) axial zwischen dem ringförmigen Übergangsbereich (54) und dem zweiten Zentrierbereich (56) befindet.

6. Zentrierteil (30) nach dem vorhergehenden Anspruch, **dadurch gekennzeichnet, dass** die zweite Zentrierfläche (46) einen Durchmesser hat, der kleiner ist, als die erste Zentrierfläche (44).

7. Zentrierteil (30) nach einem der vorhergehenden Ansprüche, **dadurch gekennzeichnet, dass** das Zentrierteil (30) eine geschlossene Rückwand (74) aufweist.

8. Zentrierteil (30) nach Anspruch 7, **dadurch gekennzeichnet, dass** die Außenfläche (58) des Zentrierteils (30) ein Demontagerelief (72) bildet, wobei sich die erste Zentrierfläche (44) axial zwischen dem Demontagerelief (72) und der Schrumpffläche (50) befindet.

9. Zentrierteil (30) nach einem der vorhergehenden Ansprüche, **dadurch gekennzeichnet, dass** das Zentrierteil (30) metallisch ist.

10. Radlager, welches mindestens einen Außenring (16) enthält, auf dem eine oder mehrere Laufbahnen geformt sind, eine oder mehrere Innenringe, auf denen eine oder mehrere Laufbahnen geformt sind, Rollkörper (18,20), um auf der oder den auf dem Außenring (16) geformten Laufbahnen oder der oder den auf dem oder den Innenringen (12,14) geformten Laufbahnen zu rollen, und ein Zentrierteil (30) nach einem der vorhergehenden Ansprüche, wobei die zylindrische Strumpffläche (50) auf den Außenring (16) geschrumpft wird, wobei der erste Zentrierbereich (52) in Bezug auf den Außenring (16) axial nach außen vorspringt.

11. Radlager nach dem vorhergehenden Anspruch, **dadurch gekennzeichnet, dass** das Zentrierteil (30) mit dem Außenring (16) ohne Lötung, Schweißung oder Verklebung fest verbunden ist.

12. Radanordnung eines Fahrzeugs, welches ein Radlager (10) nach einem der Ansprüche 10 oder 11 aufweist, und eine Bremsscheibe (42), die in der ersten Zentrierfläche (44) zentriert ist.

13. Radanordnung eines Fahrzeugs nach dem vorhergehenden Anspruch, **dadurch gekennzeichnet, dass** das Zentrierteil (30) einem der Ansprüche 5 bis 6 entspricht und dadurch, dass die Radanordnung des Weiteren eine Radfelge (40) umfasst, die auf der zweiten Zentrierfläche (46) zentriert ist.

## Claims

1. A centering part (30) for a wheel bearing (10) comprising an annular shrink-fitting area (48) comprising a cylindrical shrink-fitting seat (50) facing radially outwards and defining a reference axis, at least a first centering area (52) comprising a first cylindrical centering seat (44) facing radially outwards, and an annular transition area (54) extending from the annular shrink-fitting area (48) to the first centering area (52), with the centering part (30) having an outer surface (58) facing radially outwards comprising the cylindrical shrink-fitting seat (50), the first centering seat (44) and an outer face (60) of the annular transition area (54), and an inner surface (62) facing radially inwards and defining a cavity (64) inside the outer surface (58), **characterized in that** the centering part (30) has a radial thickness, measured between the outer surface (58) and the inner surface (62), which varies along the reference axis, while passing through a minimum value (D) at the annular transition area (54), with the minimum value (D) being less than half a radial thickness (C) measured at the annular shrink-fitting area (48) and half a radial thickness (E) measured at the first centering area (52).

2. A centering part (30) according to claim 1, **characterized in that** the annular transition area (54) has a length (L), measured in parallel with the reference axis, greater than the minimum value (D), and preferably greater than twice the minimum value (D).

3. A centering part (30) according to any one of the preceding claims, **characterized in that** the outer face (60) of the annular transition area (54) forms an outer annular shrinkage groove (68).

4. A centering part (30) according to any one of the preceding claims, **characterized in that** the inner surface (62) of the centering part (30) forms an inner annular shrinkage groove (70) at the annular transition area (54).

5. A centering part (30) according to any one of the preceding claims, **characterized in that** the centering part further comprises a second centering area (56) comprising a second centering seat (46) facing radially outwards, with the first centering area (52) being axially located between the annular transition area (54) and the second centering area (56).

6. A centering part (30) according to the preceding claim, **characterized in that** the second centering seat (46) has a diameter smaller than the first centering seat (44).

7. A centering part (30) according to any one of the preceding claims, **characterized in that** the centering part (30) comprises a solid bottom wall (74).

8. A centering part (30) according to claim 7, **characterized in that** the outer surface (58) of the centering part (30) forms a disassembly embossment (72), with the first centering seat (44) being axially located between the disassembly embossment (72) and the shrink-fitting seat (50).

9. A centering part (30) according to any one of the preceding claims, **characterized in that** the centering part (30) is made of metal.

10. A wheel bearing comprising at least one outer ring (16), whereon is/are formed one or more raceway(s), one or more inner ring(s) whereon one or more raceway (s) is/are formed, rolling bodies (18, 20) for rolling on the raceway(s) formed on the outer ring (16) and on the raceway(s) formed on the inner ring(s) (12, 14), and a centering part (30) according to any one of the preceding claims, with the cylindrical shrink-fitting seat (50) being shrink-fitted in the outer ring (16), with the first centering area (52) projecting axially outwards relative to the outer ring (16).

11. A wheel bearing according to the preceding claim, **characterized in that** the centering part (30) is made integral with the outer ring (16) without any soldering, welding or gluing.

12. A vehicle wheel assembly comprising a wheel bearing (10) according to any one of claims 10 or 11, and a brake disc (42) centered on the first centering seat (44).

13. A vehicle wheel assembly according to the preceding claim, **characterized in that** the centering part (30) complies with any one of claims 5 to 6, and **in that** the wheel assembly further comprises a wheel rim (40) centered on the second centering seat (46).
